Europäisches Patentamt
European Patent Office
Office européen des brevets

(19) (11) Veröffentlichungsnummer: **0 003 554 A2**

(12) # EUROPÄISCHE PATENTANMELDUNG

(21) Anmeldenummer: **79100280.1**

(22) Anmeldetag: **31.01.79**

(51) Int. Cl.$^2$: **C 07 F 9/20**

(30) Priorität: **04.02.78 DE 2804796**

(43) Veröffentlichungstag der Anmeldung: **22.08.79 Patentblatt 79/17**

(84) Benannte Vertragsstaaten: **BE CH DE FR GB**

(71) Anmelder: **BASF Aktiengesellschaft, Carl-Bosch-Strasse 38, D-6700 Ludwigshafen (DE)**

(72) Erfinder: **Loeffler, Hans-Peter, Dr. Chem., Defreggerstrasse 14, D-6700 Ludwigshafen (DE)**
Erfinder: **Theobald, Hans, Dr. Chem., Parkstrasse 2, D-6703 Limburgerhof (DE)**

(54) **Verfahren zur Herstellung von O-Alkyl-S-alkyl-dithiophosphorsäurechloriden.**

(57) Die vorliegende Erfindung betrifft ein Verfahren zur Herstellung von O-Alkyl-S-alkyl- dithiophosphorsäurechloriden durch Umsetzung von Salzen von O,S-Dialkyldithiophosphorsäureestern mit Phosphorpentachlorid in Abwesenheit eines Verdünnungs- oder Lösungsmittels. Es werden dabei solche Phosphorsäureestersalze eingesetzt, die unter den Reaktionsbedingungen flüßig sind.

Nach diesem Verfahren können O-Alkyl-S-alkyl- dithiophosphorsäurechloride der Formel

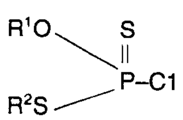

hergestellt werden, in der $R^1$ und $R^2$ gleich oder verschieden sind und Alkylreste mit 1 bis 4 Kohlenstoffatomen bedeuten. Diese Phosphorsäurechloride sind wertvolle Ausgangsstoffe für die Synthese insektizider Wirkstoffe.

EP 0 003 554 A2

0003554

BASF Aktiengesellschaft O.Z. 0050/033041

Verfahren zur Herstellung von O-Alkyl-S-alkyl-dithiophosphorsäurechloriden

Die Erfindung betrifft ein Verfahren zur Herstellung von O-Alkyl-S-alkyl-dithiophosphorsäurechloriden durch Umsetzung von flüssigen Salzen von O-Alkyl-S-alkyl-dithiophosphorsäureestern mit Phosphorpentachlorid in Abwesenheit eines Verdünnungs- oder Lösungsmittels.

Es ist bekannt, daß man O-Alkyl-S-alkyl-dithiophosphorsäurechloride durch Umsetzung von S-Alkyl-dithiophosphorsäuredichloriden mit Alkanolen erhält (SU-PS 184 863). Diese Umsetzung führt jedoch teilweise zum Triester (Houben-Weyl, Methoden der org. Chem., Bd. 12/2, S. 739, Georg-Thieme-Verlag, Stuttgart, 1964). Außerdem lassen sich die als Ausgangsverbindungen benötigten Dichloride nur schwer herstellen (Houben-Weyl, Methoden der org. Chem., Bd. 12/2, S. 682, 739, Georg-Thieme-Verlag, Stuttgart, 1964).

Weiterhin ist bekannt, daß O,O-Dialkylphosphorsäuren, O,S-Dialkylthiophosphorsäuren sowie die Alkalisalze von O,S-Dialkyl-dithiophosphorsäureestern mit Phosphorpentachlorid zu den entsprechenden Phosphorylchloriden führen (Houben-Weyl, Methoden der org. Chem., Bd.12/2, S. 283,

H/Fe

Georg-Thieme-Verlag, Stuttgart, 1964; DE-PS 1 092 464; JP-AS 5536/72). Die Umsetzung der O,S-Dialkyldithiophosphorsäureestersalze mit Phosphorpentachlorid wird dabei so durchgeführt, daß ein festes, kristallines Dithiophosphorsäureestersalz zu Phosphorpentachlorid, gelöst in einem inerten Lösungsmittel, bei einer Temperatur zwischen 20 und 70°C zugegeben wird. Das dabei ausfallende Alkalichlorid muß abfiltriert werden, das Phosphorylchlorid wird destilliert. Der Einsatz fester Salze macht die Anwesenheit eines Lösungsmittels und eine höhere Reaktionstemperatur erforderlich.

Aufgabe der Erfindung war es, ein Verfahren bereitzustellen, das es erlaubt, O,S-Dialkyl-dithiophosphorsäurechloride ohne zusätzliche Reinigungsoperationen in guter Ausbeute und hoher Reinheit herzustellen.

Es wurde gefunden, daß man O,S-Dialkyl-dithiophosphorsäurechloride der Formel I

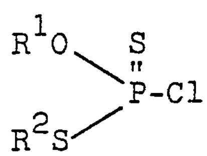

I,

in der $R^1$ und $R^2$ gleich oder verschieden sind und Alkylreste mit 1 bis 4 Kohlenstoffatomen bedeuten,
durch Umsetzung von Salzen von O-Alkyl-S-alkyl-dithiophosphorsäureestern mit Phosphorpentachlorid,
erhält, wenn man flüssige Salze der Formel II

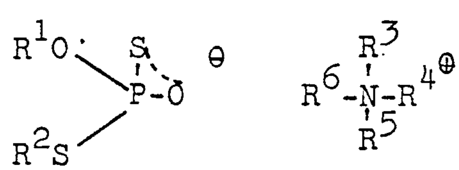

II,

in der $R^1$ und $R^2$ die obengenannten Bedeutungen haben, $R^3$ einen unverzweigten oder verzweigten Alkylrest mit 1 bis 4 Kohlenstoffatomen, $R^4$, $R^5$ und $R^6$ Wasserstoff oder unverzweigte oder verzweigte Alkylreste mit 1 bis 4 Kohlenstoffatomen bedeuten, mit Phosphorpentachlorid in Abwesenheit eines Verdünnungs- oder Lösungsmittels umsetzt.

Die wesentlichen Vorteile des Verfahrens ergeben sich aus der Wahl der Salze der Formel II und der Reaktionsbedingungen. Die Salze der Formel II sind unter den Reaktionsbedingungen flüssig und sehr leicht zugänglich (DE-OS 26 06 618). Dadurch erübrigt sich der Zusatz eines Lösungsmittels und dessen Abtrennung, so daß das Endprodukt ohne destillative Trennung in hoher Reinheit anfällt.

Die Umsetzung kann durch die folgende Reaktionsgleichung wiedergegeben werden:

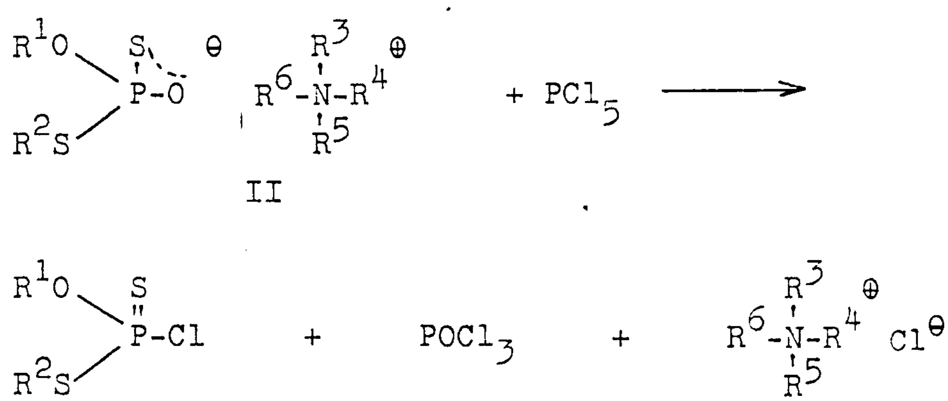

II

I

Dabei können die Reste $R^1$ und $R^2$ für Alkylgruppen mit 1 bis 4 Kohlenstoffatomen, wie Methyl, Äthyl, n-Propyl-, Isopropyl oder Butylreste stehen. Kationen der Salze der Formel II sind beispielsweise Methylammonium, Dimethylammonium, Trimethylammonium, Triäthylammonium oder Dipropylammonium.

Die Reaktionspartner O,S-Dialkyl-dithiophosphorsäureestersalz und Phosphorpentachlorid werden zweckmäßigerweise in einem Molverhältnis von 1 : 1 bis 1 : 1,2 Salz : Phosphorpentachlorid umgesetzt. Es empfiehlt sich, sie gleichzeitig in das Reaktionsgefäß zu dosieren; sie können aber auch nacheinander in kleinen Portionen zudosiert werden.

Unter diesen Bedingungen läuft die Reaktion bei Temperaturen unterhalb 60°C mit ausreichender Geschwindigkeit ab. Als Reaktionstemperatur wird deshalb zweckmäßigerweise eine Temperatur zwischen -20 und + 60°C gewählt. Vorzugsweise arbeitet man bei Temperaturen im Bereich von -10 bis + 40°C. Um die gewünschte Reaktionstemperatur zu halten, wird die Reaktionswärme in der Regel durch Kühlung abgeleitet.

Nach dem Zusammengeben der Reaktionspartner wird der Reaktionsansatz zur Vervollständigung der Umsetzung zweckmäßigerweise noch bis zu 3 Stunden lang nachgerührt. Dann wird das anfallende Phosphoroxidchlorid abdestilliert, der verbleibende Rückstand wird zur Entfernung des Ammoniumsalzes mit Eiswasser gewaschen. Um die Phasentrennung zu begünstigen, kann vor der Wasserzugabe ein Hilfslösemittel, wie Dichlormethan oder Toluol, zugesetzt werden. Nach dem Trocknen und Abziehen des gegebenenfalls verwendeten Hilfslösemittels bleibt reines O,S-Dialkyl-dithiophosphorsäurechlorid zurück, so daß eine destillative Aufarbeitung des Produktes entfällt.

Wenn das Phosphoroxidchlorid nicht gewonnen werden soll, kann der Reaktionsansatz auch direkt, gegebenenfalls nach Zugabe eines Hilfslösemittels, mit Eiswasser hydrolysiert werden. Auch dann wird nach dem Abtrennen, Trocknen und gegebenenfalls Entfernen des Hilfslösemittels das O,S-Dialkyl-dithiophosphorsäurechlorid in reiner Form erhalten.

Das entstehende flüssige O,S-Dialkyl-dithiophosphorsäurechlorid und das als Nebenprodukt anfallende flüssige Phosphoroxidchlorid begünstigen während der Reaktion die Mischbarkeit der Reaktionspartner. Nach einer zweckmäßigen Ausführungsform des Verfahrens wird die Umsetzung unter Zusatz von Phosphoroxidchlorid und/oder des dem als Ausgangsprodukt verwendeten Salz der Formel II entsprechenden O,S-Dialkyl-dithiophosphorsäurechlorids der Formel I durchgeführt. Dabei werden so viel Phosphoroxidchlorid oder O,S-Dialkyldithiophosphorsäurechlorid oder aber einer Mischung aus beiden Flüssigkeiten vorgelegt, daß ein Durchrühren des Reaktionsansatzes leicht möglich ist; anschließend werden dann O,S-Dialkyl-dithiophosphorsäureestersalz und Phosphorpentachlorid zudosiert.

Die Verbindungen der Formel I sind wichtige Ausgangsverbindungen für die Synthese insektizider Wirkstoffe.

Die folgenden Beispiele erläutern das erfindungsgemäße Verfahren.

Beispiel 1

Zu 21 g Phosphorpentachlorid in 20 ml Phosphoroxidchlorid tropft man unter Rühren bei 0 bis +15°C 24,5 g Dimethylammonium-O-äthyl-S-n-propyldithiophosphat und rührt bei 20°C 2 Stunden lang nach. Nach Reaktionsende gibt man 300 ml Dichlormethan zu, versetzt bei 0°C mit 400 ml Eiswasser und rührt eine Stunde. Man trennt die Phasen, wäscht mit Eiswasser nach, trocknet mit Calciumchlorid, filtriert und entfernt das Lösungsmittel unter vermindertem Druck. Man erhält insgesamt 20 g reines O-Äthyl-S-n-propyl-dithiophosphorsäurechlorid.
Ausbeute 92 %; $n_D^{20}$ 1.5280.

Beispiel 2

Zu 229 g Phosphorpentachlorid tropft man bei -20 bis 0°C bei guter Kühlung unter Rühren 245 g Dimethylammonium-O-äthyl-S-n-propyl-dithiophosphat in 80 Minuten ein. Man rührt eine Stunde bei 0°C und eine Stunde bei 40°C nach. Unter vermindertem Druck werden 120 g Phosphoroxidchlorid abdestilliert, der Rückstand wird bei 0°C mit Eiswasser versetzt, das Produkt wird abgetrennt, mit Eiswasser gewaschen, mit Calciumchlorid getrocknet und unter vermindertem Druck von letzten Resten Phosphoroxidchlorid befreit. Man erhält 150 g O-Äthyl-S-n-propyl-dithiophosphorsäurechlorid.
Ausbeute 69 %; $n_D^{20}$ 1.5280.

Beispiel 3

Man legt 10 g O-Äthyl-S-n-propyl-dithiophosphorsäurechlorid vor und gibt bei 0°C auf einmal 21 g Phosphorpentachlorid zu. Dann tropft man in 10 Minuten 24,5 g Dimethylammonium-O-äthyl-S-n-propyl-dithiophosphat zu und rührt 20 Minuten bei 0°C nach. Die Zugabe von Phosphorpentachlorid und danach Phosphorestersalz wird jeweils noch zweimal wiederholt. Nach Reaktionsende gibt man 300 ml Dichlormethan zu, versetzt bei 0°C mit 400 ml Eiswasser und rührt 1 Stunde. Man trennt die Phasen, wäscht mit Eiswasser nach, trocknet mit Calciumchlorid, filtriert und entfernt das Lösungsmittel im Vakuum. Man erhält insgesamt 63 g reines O-Äthyl-S-n-propyl-dithiophosphorsäurechlorid.
Ausbeute 81 %; $n_D^{20}$ 1.5280.

Beispiel 4

Zu 10 g O-Äthyl-S-n-propyl-dithiophosphorsäurechlorid dosiert man in 2 Stunden unter Rühren bei 0°C gleichmäßig und gleichzeitig 73,5 g Dimethylammonium-O-äthyl-S-n-propyl-dithiophosphat und 63 g Phosphorpentachlorid. Danach wird das Reaktionsgemisch 30 Minuten lang bei 0°C gerührt; die Aufarbeitung wird, wie in Beispiel 3 beschrieben, durchgeführt. Man erhält 64 g reines O-Äthyl-S-n-propyl-dithiophosphorsäurechlorid.
Ausbeute 87 %; $n_D^{20}$ 1.5280.

Beispiel 5

Bei 0°C tropft man unter Rühren 26 g Dimethylammonium-O-äthyl-S-sec.-butyldithiophosphat zu 21 g Phosphorpentachlorid in 10 g Phosphoroxidchlorid. Man rührt bei 0°C 3 Stunden nach, versetzt mit 200 ml Dichlormethan und gießt auf 200 ml Eiswasser. Man rührt eine Stunde bei 0°C und erhält nach Abtrennen, Waschen, Trocknen und Entfernen des Lösungsmittels 18 g O-Äthyl-S-sec.-butyldithiophosphorsäurechlorid.
Ausbeute 75 %; $n_D^{23}$ 1.5239.

## Patentansprüche

1. Verfahren zur Herstellung von O-Alkyl-S-alkyl-dithiophosphorsäurechloriden der Formel I

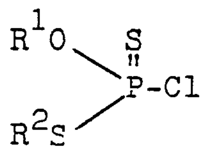

I,

in der $R^1$ und $R^2$ gleich oder verschieden sind und Alkylreste mit 1 bis 4 Kohlenstoffatomen bedeuten, durch Umsetzung von Salzen von O-Alkyl-S-alkyl-dithiophosphorsäureestern mit Phosphorpentachlorid, dadurch gekennzeichnet, daß man flüssige Salze der Formel II

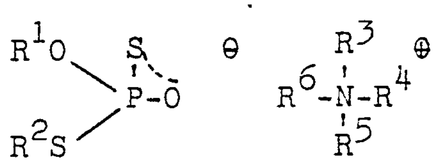

II,

in der $R^1$ und $R^2$ die obengenannten Bedeutungen haben, $R^3$ einen unverzweigten oder verzweigten Alkylrest mit 1 bis 4 Kohlenstoffatomen, $R^4$, $R^5$ und $R^6$ Wasserstoff oder unverzweigte oder verzweigte Alkylreste mit 1 bis 4 Kohlenstoffatomen bedeuten, mit Phosphorpentachlorid in Abwesenheit eines Verdünnungs- oder Lösungsmittels umsetzt.

2. Verfahren nach Anspruch 1, dadurch gekennzeichnet, daß man die Umsetzung bei einer Temperatur im Bereich von -20 bis +60°C durchführt.